# EUROPEAN PATENT APPLICATION

(11) **EP 4 379 009 A1**
(43) Date of publication of application: **05.06.2024**
(21) Application number: 22849932.3
(22) Date of filing: 29.07.2022
(51) Int. Cl.: C09D 167/04, C09D 7/61, C09D 7/40, C09D 5/00

(54) **BIODEGRADABLE COATING COMPOSITION, METHOD FOR PREPARING SAME, AND BIODEGRADABLE ARTICLE USING SAME**

(30) Priority: 30.07.2021 KR 20210101048
(71) Applicant: CJ CheilJedang Corporation, Seoul 04560 (KR)
(72) Inventor: SHIM, Yoo-Kyoung, Seoul 04560 (KR); PARK, Soyun, Seoul 04560 (KR); PARK, Jeung Yil, Seoul 04560 (KR); LEE, Eun-Hye, Seoul 04560 (KR); CHUNG, Jin Su, Seoul 04560 (KR)
(74) Representative: Dehns
(86) International application number: PCT/KR2022/011214
(87) International publication number: WO 2023/008957

(57) **Abstract**

The present invention relates to a biodegradable coating composition, a method for preparing same, and a biodegradable article using same. Particularly, according to an embodiment of the present invention, a biodegradable coating composition is a copolymerized polyhydroxyalkanoate (PHA) resin comprising a PHA resin, a surfactant, inorganic particles and a rheology modifier, and including 4-hydroxybutyrate (4-HB) repeating units. By using a PHA resin having a weight average molecular weight of 10,000-1,200,000 g/mol, the biodegradable coating composition is environmentally friendly due to excellent biodegradability and biocompatibility, and can have improved dispersibility, coatability, oil resistance and processability.

## Description

### Technical Field

The present invention relates to a biodegradable coating composition, to a process for preparing the same, and to a biodegradable article using the same.

### Background Art

In recent years, as concerns about environmental problems have increased, research on the treatment and recycling of various household wastes has been actively conducted. Specifically, although polymer materials, which are inexpensive and have excellent processability, are widely used to manufacture various products such as paper, films, fibers, packaging materials, bottles, and containers, when the lifespan of these products is over, harmful substances may be discharged when they are incinerated, and it takes hundreds of years depending on their types to completely decompose naturally.

Therefore, research on biodegradable polymers continues, which can be decomposed within a short period of time to enhance environmental friendliness, while enhancing mechanical properties, oil resistance, water resistance, and processability, and increasing the lifespan of products themselves, thereby reducing the amount of waste or enhancing their recyclability.

Polyhydroxyalkanoates (PHAs) are biodegradable polymers composed of several types of hydroxyl carboxylic acids produced by numerous microorganisms and used as intracellular storage materials. Polyhydroxyalkanoates have physical properties similar to those of conventional petroleum-derived synthetic polymers such as polybutylene adipate terephthalate (PBAT), polybutylene succinate (PBS), polybutylene succinate terephthalate (PBST), and polybutylene succinate adipate (PBSA), exhibit complete biodegradability, and are excellent in biocompatibility.

Meanwhile, in order to enhance the service lifespan and recyclability of various products such as paper, films, fibers, packaging materials, bottles, containers, and the like, it is important to enhance mechanical properties such as strength, water resistance, and oil resistance. In particular, food packaging materials for packing foods that are rich in moisture or oil, such as fruits, vegetables, bread, cookies, ice cream, and the like, have a problem in that the packaging material is torn by moisture or oil from the food, thereby contaminating the food or having a short service lifespan.

In order to enhance mechanical properties, water resistance, and oil resistance, a process of forming a coating layer on the surface of a product is used; however, there is a problem in that biodegradability and recyclability are deteriorated due to the coating layer. Specifically, an additional step may be required to remove the coating layer, or the biodegradability and recyclability of a product may be deteriorated due to the coating layer. Accordingly, there is a need for the development of a biodegradable coating composition that is excellent in dispersibility, coatability, oil resistance, water resistance, and processability while being environmentally friendly by virtue of excellent biodegradability and biocompatibility.

### [Prior Art Document]

### [Patent Document]

(Patent Document 1) Korean Publication Patent No. 2012-0103158

### Detailed Description of the Invention

### Technical Problem

Accordingly, the present invention aims to provide a biodegradable coating composition capable of enhancing dispersibility, coatability, oil resistance, and processability while being environmentally friendly by virtue of excellent biodegradability and biocompatibility, a process for preparing the same, and a biodegradable article using the same.

### Solution to the Problem

The biodegradable coating composition according to an embodiment of the present invention comprises a polyhydroxyalkanoate (PHA) resin; a surfactant; inorganic particles; and a rheology modifier, wherein the polyhydroxyalkanoate resin is a copolymerized polyhydroxyalkanoate resin comprising a 4-hydroxybutyrate (4-HB) repeat unit and has a weight average molecular weight of 10,000 g/mole to 1,200,000 g/mole.

The process for preparing a biodegradable coating composition according to another embodiment of the present invention comprises (1) stirring a polyhydroxyalkanoate (PHA) resin; (2) adding a surfactant; (3) adding a rheology modifier; and (4) adding inorganic particles, wherein steps (2) to (4) are carried out simultaneously, sequentially, or as selected at random, and the polyhydroxyalkanoate resin is a copolymerized polyhydroxyalkanoate resin comprising a 4-hydroxybutyrate (4-HB) repeat unit and has a weight average molecular weight of 10,000 g/mole to 1,200,000 g/mole.

The biodegradable article according to another embodiment of the present invention comprises a substrate; and a biodegradable coating layer, wherein the biodegradable coating layer comprises a polyhydroxyalkanoate (PHA) resin; a surfactant; inorganic particles; and a rheology modifier, and the polyhydroxyalkanoate resin is a copolymerized polyhydroxyalkanoate resin comprising a 4-hydroxybutyrate (4-HB) repeat unit and has a weight average molecular weight of 10,000 g/mole to 1,200,000 g/mole.

### Advantageous Effects of the Invention

As the biodegradable coating composition according to an embodiment of the present invention comprises a specific polyhydroxyalkanoate (PHA) resin, a surfactant, inorganic particles, and a rheology modifier, it is possible to enhance dispersibility, dispersion stability, storage stability, coatability, oil resistance, and processability.

In particular, as the biodegradable coating composition comprises inorganic particles that do not contain a hydrophilic functional group as the inorganic particles, it is possible to further enhance oil resistance.

In addition, the biodegradable coating composition comprises a copolymerized polyhydroxyalkanoate resin having a specific repeat unit and weight average molecular weight as the polyhydroxyalkanoate resin, and it has excellent dispersibility although it contains a small amount of surfactant.

Therefore, a coating layer formed using the biodegradable coating composition is environmentally friendly since it has excellent biodegradability and biocompatibility, while it has excellent dispersibility and coatability. In particular, a biodegradable article comprising the coating layer has excellent oil resistance, so that it can exhibit excellent properties when applied as articles that require oil resistance, such as food packaging materials for packaging oily foods.

### Brief Description of the Drawing

Fig. 1 shows a biodegradable article according to an embodiment of the present invention.
Fig. 2 shows a biodegradable article according to another embodiment of the present invention.
Fig. 3 shows photographs of the surfaces of the biodegradable articles of Example 2-1, Comparative Example 2-2, and Comparative Example 2-4.

### [Explanation of Reference Numerals]

1: biodegradable article
100: substrate
200: biodegradable coating layer

### Best Mode for Carrying out the Invention

Hereinafter, the present invention will be described in detail. The present invention is not limited to the disclosures given below, but it may be modified into various forms as long as the gist of the invention is not changed.

Throughout the present specification, when a part is referred to as "comprising" an element, it is understood that other elements may be comprised, rather than other elements are excluded, unless specifically stated otherwise.

All numbers and expressions related to the quantities of components, reaction conditions, and the like used herein are to be understood as being modified by the term "about," unless otherwise indicated.

In the present specification, in the case where an element is mentioned to be formed "on" or "under" another element, it means not only that one element is directly formed "on" or "under" another element, but also that one element is indirectly formed on or under another element with other element(s) interposed between them.

Throughout the present specification, the terms first, second, and the like are used to describe various components. But the components should not be limited by the terms. The terms are used only for the purpose of distinguishing one component from another.

In the present specification, the references for "one side" and "the other side" or "on" and "under" of each component are explained based on the drawings. These terms are only for distinguishing components and may be interchanged with each other in actual application.

In addition, for the sake of description, the sizes of individual elements in the appended drawings may be exaggeratedly depicted and do not indicate the actual sizes. In addition, the same reference numerals refer to the same elements throughout the specification.

### Biodegradable coating composition

The biodegradable coating composition according to an embodiment of the present invention comprises a polyhydroxyalkanoate (PHA) resin; a surfactant; inorganic particles; and a rheology modifier, wherein the polyhydroxyalkanoate resin is a copolymerized polyhydroxyalkanoate resin comprising a 4-hydroxybutyrate (4-HB) repeat unit and has a weight average molecular weight of 10,000 g/mole to 1,200,000 g/mole.

The solids content of the biodegradable coating composition may be 10% by weight to 60% by weight. For example, the solids content of the biodegradable coating composition may be 10% by weight to 60% by weight, 15% by weight to 55% by weight, 20% by weight to 55% by weight, 25% by weight to 50% by weight, 30% by weight to 45% by weight, or 35% by weight to 45% by weight.

The biodegradable coating composition may have a viscosity of 130 mPa s to 1,000 mPa·s. For example, the viscosity of the biodegradable coating composition may be 130 mPa·s to 1,000 mPa·s, 130 mPa·s to 900 mPa·s, 130 mPa·s to 800 mPa·s, 140 mPa·s to 750 mPa s, 150 mPa s to 600 mPa s, 155 mPa s to 550 mPa s, 160 mPa s to 400 mPa s, 165 mPa s to 350 mPa s, or 165 mPa s to 300 mPa s.

### Polyhydroxyalkanoate (PHA) resin

A polyhydroxyalkanoate (PHA) resin has physical properties similar to those of conventional petroleum-derived synthetic polymers such as polybutylene adipate terephthalate (PBAT), polybutylene succinate (PBS), polybutylene succinate terephthalate (PBST), and polybutylene succinate adipate (PBSA), exhibits complete biodegradability, and is excellent in biocompatibility.

Specifically, the PHA resin is a natural thermoplastic polyester polymer that accumulates in microbial cells. Since it is a biodegradable material, it can be composted and finally decomposed into carbon dioxide, water, and organic waste without generating toxic waste. In particular, since PHA is biodegradable even in soil and sea, when the biodegradable coating composition and a biodegradable article prepared using the same comprise a PHA resin, it may have environmentally friendly characteristics. Thus, the biodegradable coating composition and a biodegradable article using the same have a great advantage in that they can be used in various fields since they are biodegradable and environmentally friendly.

As the biodegradable coating composition according to an embodiment of the present invention comprises a polyhydroxyalkanoate (PHA) resin, biodegradability can be enhanced without deterioration of mechanical properties.

The PHA resin may be formed by enzyme-catalyzed polymerization of one or more monomer repeat units in living cells.

The PHA resin may be a copolymerized polyhydroxyalkanoate resin (hereinafter, referred to as a PHA copolymer resin), specifically, a copolymer in which different repeat units are randomly distributed in the polymer chain.

Examples of repeat units that may be contained in the PHA resin include 2-hydroxybutyrate, lactic acid, glycolic acid, 3-hydroxybutyrate (hereinafter, referred to as 3-HB), 3-hydroxypropionate (hereinafter, referred to as 3-HP), 3-hydroxyvalerate (hereinafter, referred to as 3-HV), 3-hydroxyhexanoate (hereinafter, referred to as 3-HH), 3-hydroxyheptanoate (hereinafter, referred to as 3-HHep), 3-hydroxyoctanoate (hereinafter, referred to as 3-HO), 3-hydroxynonanoate (hereinafter, referred to as 3-HN), 3- hydroxy decanoate (hereinafter, referred to as 3-HD), 3-hydroxydodecanoate (hereinafter, referred to as 3-HDd), 4-hydroxybutyrate (hereinafter, referred to as 4-HB), 4-hydroxyvalerate (hereinafter, referred to as 4-HV), 5-hydroxyvalerate (hereinafter, referred to as 5-HV), and 6-hydroxyhexanoate (hereinafter, referred to as 6-HH). The PHA resin may comprise one or more repeat units selected from the above.

Specifically, the PHA resin may comprise one or more repeat units selected from the group consisting of 3-HB, 4-HB, 3-HP, 3-HH, 3-HV, 4-HV, 5-HV, and 6-HH.

More specifically, the PHA resin may comprise a 4-HB repeat unit. That is, the PHA resin may be a PHA copolymer resin comprising a 4-HB repeat unit.

In addition, the PHA resin may comprise isomers. For example, the PHA resin may comprise structural isomers, enantiomers, or geometric isomers. Specifically, the PHA resin may comprise structural isomers.

In addition, the PHA resin may be a PHA copolymer resin that comprises a 4-HB repeat unit and further comprises one repeat unit different from the 4-HB repeat unit, or two, three, four, five, six, or more repeat units different from each other. For example, the PHA resin may be poly-3-hydroxybutyrate-co-4-hydroxybutyrate (hereinafter, referred to as 3HB-co-4HB).

According to an embodiment of the present invention, it is important to adjust the content of the 4-HB repeat unit in the PHA copolymer resin.

Specifically, in order to implement the physical properties desired in the present invention, in particular, in order to increase the biodegradability in soil and sea and to achieve excellent dispersibility, dispersion stability, storage stability, coatability, water resistance, processability, and productivity without deterioration of mechanical properties, it is very important to adjust the content of the 4-HB repeat unit contained in the PHA copolymer resin.

More specifically, the PHA copolymer resin may comprise a 4-HB repeat unit in an amount of 0.1% by weight to 60% by weight based on the total weight of the PHA copolymer resin. For example, the content of a 4-HB repeat unit may be 0.1% by weight to 60% by weight, 0.1% by weight to 55% by weight, 0.5% by weight to 60% by weight, 0.5% by weight to 55% by weight, 1% by weight to 60% by weight, 1% by weight to 55% by weight, 1% by weight to 50% by weight, 2% by weight to 55% by weight, 3% by weight to 55% by weight, 3% by weight to 50% by weight, 5% by weight to 55% by weight, 5% by weight to 50% by weight, 10% by weight to 55% by weight, 10% by weight to 50% by weight, 1% by weight to 40% by weight, 1% by weight to 30% by weight, 1% by weight to 29% by weight, 1% by weight to 25% by weight, 1% by weight to 24% by weight, 2% by weight to 20% by weight, 2% by weight to 23% by weight, 3% by weight to 20% by weight, 3% by weight to 15% by weight, 4% by weight to 18% by weight, 5% by weight to 15% by weight, 8% by weight to 12% by weight, 9% by weight to 12% by weight, 15% by weight to 55% by weight, 15% by weight to 50% by weight, 20% by weight to 55% by weight, 20% by weight to 50% by weight, 25% by weight to 55% by weight, 25% by weight to 50% by weight, 35% by weight to 60% by weight, 40% by weight to 55% by weight, or 45% by weight to 55% by weight, based on the total weight of the PHA copolymer resin.

As the content of a 4-HB repeat unit satisfies the above range, it is possible to increase the biodegradability in soil and sea and to further enhance such characteristics as dispersibility, dispersion stability, storage stability, coatability, oil resistance, processability, and productivity without deterioration of mechanical properties.

According to an embodiment of the present invention, the PHA resin may be a PHA copolymer resin whose crystallinity has been adjusted. Specifically, the PHA resin comprises one or more of a 4-HB repeat unit, and the content of the 4-HB repeat unit may be controlled to adjust the crystallinity of the PHA resin.

In addition, the PHA resin may be a copolymerized polyhydroxyalkanoate (PHA) resin that comprises at least one repeat unit selected from the group consisting of 3-hydroxybutyrate (3-HB), 4-hydroxybutyrate (4-HB), 3-hydroxypropionate (3-HP), 3-hydroxyhexanoate (3-HH), 3-hydroxyvalerate (3-HV), 4-hydroxyvalerate (4-HV), 5-hydroxyvalerate (5-HV), and 6-hydroxyhexanoate (6-HH).

Specifically, the PHA copolymer resin may comprise a 4-HB repeat unit and further comprises one or more repeat units selected from the group consisting of a 3-HB repeat unit, a 3-HP repeat unit, a 3-HH repeat unit, a 3-HV repeat unit, a 4-HV repeat unit, a 5-HV repeat unit, and a 6-HH repeat unit. More specifically, the PHA resin may comprise a 4-HB repeat unit and a 3-HB repeat unit.

For example, the PHA copolymer resin may comprise a 3-HB repeat unit in an amount of 20% by weight or more, 35% by weight or more, 40% by weight or more, 50% by weight or more, 60% by weight or more, 70% by weight or more, or 75% by weight or more, and 99% by weight or less, 98% by weight or less, 97% by weight or less, 96% by weight or less, 95% by weight or less, 93% by weight or less, 91% by weight or less, 90% by weight or less, 80% by weight or less, 70% by weight or less, 60% by weight or less, or 55% by weight or less, based on the total weight of the PHA copolymer resin.

The PHA resin whose crystallinity is adjusted may be one in which its crystallinity and amorphousness are adjusted as the irregularities are increased in its molecular structure. Specifically, the types or ratios of the monomers or the types or contents of the isomers may be adjusted.

According to an embodiment of the present invention, the PHA resin may comprise two or more types of PHA resins having different crystallinities. Specifically, the PHA resin may be prepared by mixing two or more types of PHA resins having different crystallinities to have the content of a 4-HB repeat unit in the specific range.

Specifically, the PHA resin may comprise a first PHA resin that is a semi-crystalline PHA resin.

As a semi-crystalline PHA (hereinafter, referred to as scPHA) resin with controlled crystallinity, the first PHA resin may comprise a 4-HB repeat unit in an amount of 0.1% by weight to 30% by weight. For example, the first PHA resin may comprise a 4-HB repeat unit in an amount of 0.1% by weight to 30% by weight, 0.5% by weight to 30% by weight, 1% by weight to 30% by weight, 3% by weight to 30% by weight, 1% by weight to 28% by weight, 1% by weight to 25% by weight, 1% by weight to 24% by weight, 1% by weight to 15% by weight, 2% by weight to 25% by weight, 3% by weight to 25% by weight, 3% by weight to 24% by weight, 5% by weight to 24% by weight, 7% by weight to 20% by weight, 10% by weight to 20% by weight, 15% by weight to 25% by weight, or 15% by weight to 24% by weight.

The glass transition temperature (Tg) of the first PHA resin may be -30°C to 80°C, - 30°C to 10°C, -25°C to 5°C, -25°C to 0°C, -20°C to 0°C, or -15°C to 0°C. The crystallization temperature (Tc) of the first PHA resin may be 70°C to 120°C, 75°C to 120°C, or 75°C to 115°C. The melting temperature (Tm) of the first PHA resin may be 105°C to 165°C, 110°C to 160°C, 115°C to 155°C, or 120°C to 150°C.

The first PHA resin may have a weight average molecular weight of 10,000 g/mole to 1,200,000 g/mole, 50,000 g/mole to 1,100,000 g/mole, 100,000 g/mole to 1,000,000 g/mole, 100,000 g/mole to 900,000 g/mole, 200,000 g/mole to 800,000 g/mole, 200,000 g/mole to 600,000 g/mole, or 200,000 g/mole to 400,000 g/mole.

In addition, the PHA resin may comprise a second PHA, which is an amorphous PHA resin with controlled crystallinity.

As an amorphous PHA (hereinafter, referred to as aPHA) resin with controlled crystallinity, the second PHA resin may comprise a 4-HB repeat unit in an amount of 15% by weight to 60% by weight, 15% by weight to 55% by weight, 20% by weight to 55% by weight, 25% by weight to 55% by weight, 30% by weight to 55% by weight, 35% by weight to 55% by weight, 20% by weight to 50% by weight, 25% by weight to 50% by weight, 30% by weight to 50% by weight, 35% by weight to 50% by weight, or 20% by weight to 40% by weight.

The glass transition temperature (Tg) of the second PHA resin may be -45°C to -10°C, -35°C to -15°C, -35°C to -20°C, or -30°C to -20°C.

In addition, the crystallization temperature (Tc) of the second PHA resin may not be measured or may be 60°C to 120°C, 60°C to 110°C, 70°C to 120°C, or 75°C to 115°C. The melting temperature (Tm) of the second PHA resin may not be measured or may be 100°C to 170°C, 100°C to 160°C, 110°C to 160°C, or 120°C to 150°C.

The second PHA resin may have a weight average molecular weight of 10,000 g/mole to 1,200,000 g/mole, 10,000 g/mole to 1,000,000 g/mole, 50,000 g/mole to 1,000,000 g/mole, 200,000 g/mole to 1,200,000 g/mole, 300,000 g/mole to 1,000,000 g/mole, 100,000 g/mole to 900,000 g/mole, 500,000 g/mole to 900,000 g/mole, 200,000 g/mole to 800,000 g/mole, or 200,000 g/mole to 400,000 g/mole.

The first PHA resin and the second PHA resin may be distinguished in terms of the content of a 4-HB repeat unit and may have at least one characteristic selected from the group consisting of the above glass transition temperature (Tg), crystallization temperature (Tc), and melting temperature (Tm). Specifically, the first PHA resin and the second PHA resin may be distinguished in terms of the content of a 4-HB repeat unit, glass transition temperature (Tg), crystallization temperature (Tg), melting temperature (Tm), and the like.

According to an embodiment of the present invention, the PHA resin may comprise the first PHA resin or both the first PHA resin and the second PHA resin.

Specifically, as the PHA resin comprises the first PHA resin, which is a semi-crystalline PHA resin, or both the first PHA resin, which is a semi-crystalline PHA resin, and the second PHA resin, which is an amorphous PHA resin, more specifically, as the contents of the first PHA resin and the second PHA resin are adjusted, it is possible to further enhance dispersibility, dispersion stability, storage stability, coatability, and processability.

In addition, the glass transition temperature (Tg) of the PHA resin may be -45°C to 80°C, -35°C to 80°C, -30°C to 80°C, -25°C to 75°C, -20°C to 70°C, -35°C to 5°C, -25°C to 5°C, -35°C to 0°C, -25°C to 0°C, -30°C to -10°C, -35°C to -15°C, -35°C to -20°C, -20°C to 0°C, -15°C to 0°C, or -15°C to -5°C.

In addition, the crystallization temperature (Tc) of the PHA resin may not be measured or may be 60°C to 120°C, 60°C to 110°C, 70°C to 120°C, 75°C to 120°C, 75°C to 115°C, 75°C to 110°C, or 90°C to 110°C.

The melting temperature (Tm) of the PHA resin may not be measured or may be 100°C to 170°C, 105°C to 170°C, 105°C to 165°C, 110°C to 160°C, 115°C to 155°C, 110°C to 150°C, 120°C to 150°C, or 120°C to 140°C.

In addition, the PHA resin may have a weight average molecular weight of 10,000 g/mole to 1,200,000 g/mole. For example, the weight average molecular weight of the PHA resin may be 50,000 g/mole to 1,200,000 g/mole, 100,000 g/mole to 1,200,000 g/mole, 50,000 g/mole to 1,000,000 g/mole, 100,000 g/mole to 1,000,000 g/mole, 200,000 g/mole to 1,200,000 g/mole, 250,000 g/mole to 1,150,000 g/mole, 300,000 g/mole to 1,100,000 g/mole, 350,000 g/mole to 1,000,000 g/mole, 350,000 g/mole to 950,000 g/mole, 100,000 g/mole to 900,000 g/mole, 200,000 g/mole to 800,000 g/mole, 200,000 g/mole to 700,000 g/mole, 250,000 g/mole to 650,000 g/mole, 200,000 g/mole to 400,000 g/mole, 300,000 g/mole to 800,000 g/mole, 300,000 g/mole to 600,000 g/mole, 500,000 g/mole to 1,200,000 g/mole, 500,000 g/mole to 1,000,000 g/mole 550,000 g/mole to 1,050,000 g/mole, 550,000 g/mole to 900,000 g/mole,600,000 g/mole to 900,000 g/mole, or 500,000 g/mole to 900,000 g/mole.

The PHA resin may have a crystallinity of 90% or less as measured by a differential scanning calorimeter (DSC). For example, the crystallinity of the PHA resin may be measured by differential scanning calorimetry and may be 90% or less, 85% or less, 80% or less, 75% or less, or 70% or less.

In addition, the PHA resin may have an average particle size of 0.5 µm to 5 µm. For example, the PHA resin may have an average particle size of 0.5 µm to 5 µm, 0.5 µm to 4.5 µm, 0.7 µm to 4 µm, 1 µm to 3.5 µm, or 1.2 µm to 3.5 µm.

The average particle size of the PHA resin may be measured with a nano particle size analyzer (e.g., Zetasizer Nano ZS). Specifically, the PHA resin is subjected to measurement of average particle size through dynamic light scattering (DLS) at a temperature of 25°C and a measurement angle of 175° using Zetasizer Nano ZS (manufacturer: Marven). In such an event, the value of the peak derived through the polydispersity index (PDI) in the confidence interval of 0.5 was taken as the particle size.

The PHA resin may have a polydispersity index (PDI) of less than 2.5. For example, the polydispersity index of the PHA resin may be less than 2.5, 2.3 or less, 2.1 or less, or 2.0 or less.

As the average particle size and polydispersity index of the PHA resin satisfy the above ranges, dispersibility, dispersion stability, storage stability, coatability, and processability can be further enhanced.

In addition, the PHA resin may be obtained by cell disruption using a non-mechanical method or a chemical method. Specifically, since the PHA resin is a natural thermoplastic polyester polymer that accumulates in microbial cells and has a relatively large average particle size, it may be obtained through a disruption process in order to enhance dispersibility, coatability, and processability.

According to another embodiment of the present invention, the biodegradable coating composition may further comprise a biodegradable polymer.

Specifically, the biodegradable polymer may comprise at least one selected from the group consisting of polylactic acid (PLA), polybutylene adipate terephthalate (PBAT), polybutylene succinate (PBS), thermoplastic starch (TPS), polybutylene succinate terephthalate (PBST), polyethylene terephthalate (PET), polybutylene succinate adipate (PBSA), polybutylene adipate (PBA), polypropylene (PP), polyethylene (PE), and polycaprolactone (PCL). As the biodegradable coating composition further comprises the biodegradable polymer, it may be more advantageous for controlling characteristics such as mechanical properties.

In addition, the biodegradable coating composition may comprise the PHA resin in an amount of 10% by weight to 70% by weight based on the total weight of the biodegradable coating composition on the basis of solids content. For example, the content of the PHA resin may be 10% by weight to 70% by weight, 20% by weight to 65% by weight, 25% by weight to 55% by weight, 30% by weight to 45% by weight, or 35% by weight to 40% by weight, based on the total weight of the biodegradable coating composition on the basis of solids content.

### Surfactant

According to an embodiment of the present invention, the biodegradable coating composition comprises a surfactant. As the biodegradable coating composition comprises a surfactant, dispersibility, dispersion stability, storage stability, coatability, and processability can be further enhanced.

Specifically, the surfactant may be at least one selected from the group consisting of cationic surfactants, anionic surfactants, phosphoric acid-based surfactants, fatty acid-based surfactants, acrylic-based surfactants, urethane-based surfactants, epoxy-based surfactants, and nonionic surfactants. It may be a polymeric surfactant comprising at least one selected from the group consisting of carboxylic acids, amines, isocyanates, and derivatives thereof.

For example, the surfactant may be at least one selected from the group consisting of polyvinyl alcohol, sodium dodecylbenzene sulfonate, polyvinylpyrrolidone, methyl polyethylene alkyl ether, alkyl benzene sulfonate, nonylphenol ether sulfate, sodium lauryl sulfate, lithium dodecyl sulfate, alkyl phosphate, glyceryl esters, and polypropylene glycol esters.

In addition, the biodegradable coating composition may comprise the surfactant in an amount less than 0.3% by weight based on the total weight of the biodegradable coating composition on the basis of solids content. For example, the content of the surfactant may be less than 0.3% by weight, less than 0.2% by weight, or less than 0.15% by weight, and may be 0.01% by weight to less than 0.3% by weight, 0.01% by weight to 0.25% by weight, 0.03% by weight to 0.2% by weight, or 0.05% by weight to 0.15% by weight, based on the total weight of the biodegradable coating composition on the basis of solids content.

Although the biodegradable coating composition comprises a smaller amount of surfactant than the conventional one, it has excellent dispersibility, dispersion stability, storage stability, coatability, and processability.

### Inorganic particles

According to an embodiment of the present invention, the biodegradable coating composition comprises inorganic particles.

Specifically, the inorganic particles may not contain a hydrophilic functional group. Alternatively, the inorganic particles may contain a hydrophobic functional group. As the biodegradable coating composition comprises inorganic particles that do not contain a hydrophilic functional group or inorganic particles that contain a hydrophobic functional group, it is possible to further enhance oil resistance.

More specifically, as the biodegradable coating composition comprises inorganic particles, oil resistance can be enhanced by adjusting the contact angle of the surface of a coating layer formed using the same.

The inorganic particles may be at least one selected from the group consisting of talc, clay, silica, titanium oxide, montmorillonite, boron nitride, calcium carbonate, titanium dioxide, antimony trioxide, and zinc oxide.

In addition, the inorganic particles may be spherical, irregular, branched, rod-shaped, bead-shaped, oval-shaped, or plate-shaped. Specifically, the inorganic particles may have different shapes depending on their types. The biodegradable coating composition can further enhance oil resistance as it comprises inorganic particles of a specific type and shape.

The biodegradable coating composition may comprise the inorganic particles in an amount of 0.1% by weight to 10% by weight based on the total weight of the biodegradable coating composition on the basis of solids content. For example, the content of the inorganic particles may be 0.1% by weight to 10% by weight, 0.2% by weight to 8% by weight, 0.5% by weight to 4% by weight, 0.7% by weight to 2% by weight, or 0.9% by weight to 1.5% by weight, based on the total weight of the biodegradable coating composition on the basis of solids content.

### Rheology modifier

According to an embodiment of the present invention, the biodegradable coating composition comprises a rheology modifier. As the biodegradable coating composition comprises a rheology modifier, coatability, processability, and productivity can be further enhanced.

The rheology modifier may be at least one selected from the group consisting of gum, clay mineral, cellulose derivatives, cellulose-based modifiers, acrylic-based modifiers, and urethane-based modifiers. For example, the rheology modifier may be one of gum, clay mineral, or cellulose-based modifier, or may be a mixture of two types, such as gum and clay mineral or gum and cellulose-based modifier.

The gum may be at least one selected from the group consisting of xanthan gum, guar gum, gellan gum, locust gum, Arabic gum, carrageenan, karaya gum, gati gum, tara gum, tamarind gum, and tragacanth gum. The clay mineral may be at least one selected from the group consisting of bentonite, smectite, etherpulgite, montmorillonite, kaolinite, sericite, and illite.

The cellulose derivative may be at least one selected from the group consisting of casein, sodium caseinate, and sodium alginate. The cellulose-based modifier may be at least one selected from the group consisting of methyl cellulose, hydroxypropyl cellulose, and methylhydroxypropyl cellulose.

In addition, the rheology modifier may have a branched, linear, plate-like, irregular, spherical, or rod-like shape. As the rheology modifier has the above shape, coatability, processability, and productivity can be further enhanced.

The rheology modifier may be employed in an amount of 0.01% by weight to 20% by weight, 0.01% by weight to 15% by weight, 0.01% by weight to 12% by weight, 0.01% by weight to 10% by weight, 0.01% by weight to 8% by weight, 0.01% by weight to 5% by weight, 0.01% by weight to 4% by weight, 0.01% by weight to 3% by weight, 0.02% by weight to 2% by weight, 0.02% by weight to 1.5% by weight, or 0.03% by weight to 1% by weight, based on the total weight of the biodegradable coating composition on the basis of solids content.

In addition, the biodegradable coating composition may further comprise at least one additive selected from the group consisting of antioxidants, stabilizers, antibacterial agents, antifoaming agents, preservatives, and pH adjusting agents.

The antioxidant is an additive for preventing decomposition by ozone or oxygen, preventing oxidation during storage, and preventing deterioration of physical properties. Any commonly used antioxidant may be used as long as the effect of the present invention is not impaired.

Specifically, the antioxidant may comprise at least one selected from the group consisting of hindered phenol-based antioxidants and phosphite-based (phosphorus-based) antioxidants.

For example, the hindered phenol-based antioxidant may comprise, for example, at least one selected from the group consisting of 4,4'-methylene-bis(2,6-di-t-butylphenol), octadecyl-3-(3,5-di-t-butyl-4-hydroxyphenyl)propionate, pentaerythritol tetrakis[3-(3,5-di-t-butyl-4-hydroxyphenyl)propionate), and 3,9-bis[2-[3-(3-tert-butyl-4-hydroxy-5-methylphenyl)propionyloxy]-1,1-dimethylethyl]-2,4,8,10-tetraoxaspiro[5.5]undecane.

In addition, the phosphite-based (phosphorus-based) antioxidant may comprise, for example, at least one selected from the group consisting of tris-(2,4-di-t-butylphenyl)phosphite, bis-(2,4-di-t-butylphenyl)pentaerythritol-diphosphite, bis-(2,6-di-t-butyl-4-methylphenyl)pentaerythritol-diphosphite, distearyl-pentaerythritol-diphosphite, [bis(2,4-di-t-butyl-5-methylphenoxy)phosphino]biphenyl, and N,N-bis[2-[[2,4,8,10-tetrakis(1,1-dimethylethyl)dibenzo[d,f][1,3,2]dioxyphosphepin-6-yl]oxy]-ethyl]ethanamine.

The antioxidant may be employed in an amount of 0.01% by weight to 20% by weight, 0.01% by weight to 15% by weight, 0.01% by weight to 12% by weight, 0.01% by weight to 10% by weight, 0.01% by weight to 8% by weight, 0.01% by weight to 5% by weight, 0.2% by weight to 4.5% by weight, 0.2% by weight to 4% by weight, or 0.5% by weight to 3% by weight, based on the total weight of the biodegradable coating composition on the basis of solids content.

The stabilizer is an additive for protecting against oxidation and heat and preventing color change. Any commonly used stabilizer may be used as the stabilizer as long as the effect of the present invention is not impaired.

Specifically, the stabilizer may be at least one selected from the group consisting of trimethyl phosphate, triphenyl phosphate, trimethyl phosphine, phosphoric acid, and phosphorous acid.

The stabilizer may be employed in an amount of 0.01% by weight to 20% by weight, 0.01% by weight to 15% by weight, 0.01% by weight to 12% by weight, 0.01% by weight to 10% by weight, 0.01% by weight to 8% by weight, 0.01% by weight to 5% by weight, 0.2% by weight to 4.5% by weight, 0.2% by weight to 4% by weight, or 0.5% by weight to 3% by weight, based on the total weight of the biodegradable coating composition on the basis of solids content.

The antibacterial agent may be at least one natural antibacterial agent selected from the group consisting of organic acids, bacteriocins, and calcium agents or colloids, or compounds containing elements such as silver. It may be at least one selected from the group consisting of polylysine, benzisothiazolinone, vinegar powder, chitooligosaccharide, hydrogen peroxide, ethylenediaminetetraacetic acid, potassium sorbate, sorbic acid, propionic acid, potassium propionate, sodium benzoate, 1,2-hexanediol, and 1,2-octanediol.

The antibacterial agent may be employed in an amount of 0.01% by weight to 5% by weight, 0.01% by weight to 3% by weight, 0.01% by weight to 1% by weight, 0.1% by weight to 1% by weight, 0.2% by weight to 1% by weight, or 0.3% by weight to 1% by weight, based on the total weight of the biodegradable coating composition on the basis of solids content.

In addition, the antifoaming agent is an additive for preventing or reducing foaming. Any commonly used antifoaming agent may be used as the antifoaming agent as long as the effect of the present invention is not impaired.

For example, the antifoaming agent may be at least one selected from the group consisting of an alcohol-based antifoaming agent, a polar compound-based antifoaming agent, an inorganic particle-based antifoaming agent, and a silicone-based antifoaming agent, or may be at least one selected from the group consisting of ethyl alcohol, 2-ethylhexanol, polysiloxane, dimethylpolysiloxane, silicone paste, silicone emulsion, silicone treatment powder, fluorosilicone, distearic acid, ethylene glycol, and natural wax.

The antifoaming agent may be employed in an amount of 0.0001% by weight to 5% by weight, 0.0001% by weight to 3% by weight, 0.0001% by weight to 1% by weight, 0.001% by weight to 1% by weight, or 0.001% by weight to 0.5% by weight, based on the total weight of the biodegradable coating composition on the basis of solids content.

In addition, the preservative may be at least one natural preservative selected from the group consisting of hydroxyacetophenone, centella asiatica extract, 1,2-hexanediol, and 1,3-butanediol, and may be at least one preservative selected from the group consisting of 1,2-benzisothiazolin-3-one and potassium benzoate, but it is not limited thereto.

The preservative may be employed in an amount of 0.01% by weight to 20% by weight, 0.01% by weight to 15% by weight, 0.01% by weight to 12% by weight, 0.01% by weight to 10% by weight, 0.01% by weight to 8% by weight, 0.01% by weight to 5% by weight, 0.2% by weight to 4.5% by weight, 0.2% by weight to 4% by weight, or 0.5% by weight to 3% by weight, based on the total weight of the biodegradable coating composition on the basis of solids content.

In addition, the pH adjusting agent refers to a material that is added to a solution to adjust the pH. It may comprise both a pH reducing agent for decreasing the pH and a pH increasing agent for increasing the pH. Specifically, the pH reducing agent may be a strongly acidic substance such as sulfuric acid and hydrochloric acid or an aqueous ammonium salt solution, and the pH increasing agent may be a basic substance such as ammonia water, sodium hydroxide, lithium hydroxide, and potassium hydroxide, or an aqueous acetate salt solution, but it is not limited thereto.

For example, the pH increasing agent may be at least one selected from the group consisting of acetic acid, lactic acid, hydrochloric acid, phosphoric acid, sodium hydroxide, citric acid, malic acid, fumaric acid, potassium phosphate, sodium bicarbonate, and sodium phosphate.

The pH adjusting agent may be employed in an amount of 0.01% by weight to 20% by weight, 0.01% by weight to 15% by weight, 0.01% by weight to 12% by weight, 0.01% by weight to 10% by weight, 0.01% by weight to 8% by weight, 0.01% by weight to 5% by weight, 0.2% by weight to 4.5% by weight, 0.2% by weight to 4% by weight, or 0.5% by weight to 3% by weight, based on the total weight of the biodegradable coating composition on the basis of solids content.

### Process for preparing a biodegradable coating composition

The process for preparing a biodegradable coating composition according to another embodiment of the present invention comprises (1) stirring a polyhydroxyalkanoate (PHA) resin; (2) adding a surfactant; (3) adding a rheology modifier; and (4) adding inorganic particles, wherein steps (2) to (4) are carried out simultaneously, sequentially, or as selected at random, and the polyhydroxyalkanoate resin is a copolymerized polyhydroxyalkanoate resin comprising a 4-hydroxybutyrate (4-HB) repeat unit and has a weight average molecular weight of 10,000 g/mole to 1,200,000 g/mole.

### First, a polyhydroxyalkanoate (PHA) resin is stirred (step (1)).

Specifically, a PHA resin may be stirred to prepare a first aqueous dispersion. Details on the PHA resin are as described above.

The stirring may be carried out for 5 minutes to 150 minutes at 3,000 rpm or less. For example, the stirring may be carried out using a stirrer (product name: Homo-disper, manufacturer: Premix, maximum rotation speed per minute: 8,000 rpm) utilizing uniaxial shear stress. It may be carried out for 5 minutes to 150 minutes, 20 minutes to 130 minutes, 25 minutes to 110 minutes, 30 minutes to 100 minutes, 60 minutes to 120 minutes, 70 minutes to 140 minutes, 5 minutes to 70 minutes, 10 minutes to 60 minutes, 20 minutes to 80 minutes, or 30 minutes to 60 minutes, at 3,000 rpm or less, 2,500 rpm or less, 2,000 rpm or less, 1,500 rpm or less, 1,000 rpm or less, 800 rpm or less, 650 rpm or less, 500 rpm to 3,000 rpm, 550 rpm to 2,500 rpm, or 600 rpm to 2,000 rpm.

As the stirring is carried out under the above conditions, dispersibility, dispersion stability, storage stability, coatability, and processability can be further enhanced.

In addition, the stirring may be carried out in a solvent.

Specifically, the solvent used in the stirring may be water, distilled water, or a hydrophilic solvent. Specifically, the solvent may be water, distilled water, or a hydrophilic solvent, or a mixture of water, distilled water, and a hydrophilic solvent. For example, the hydrophilic solvent may be at least one selected from the group consisting of methanol, ethanol, n-propanol, isopropanol, n-butanol, isobutanol, sec-butanol, tert-butanol, n-amyl alcohol, isoamyl alcohol, sec-amyl alcohol, tert-amyl alcohol, 1-ethyl-1-propanol, 2-methyl-1-butanol, n-hexanol, and cyclohexanol.

The solids content of the first aqueous dispersion may be 10% by weight to 60% by weight. For example, the solids content of the first aqueous dispersion may be 10% by weight to 60% by weight, 15% by weight to 55% by weight, 20% by weight to 55% by weight, 25% by weight to 50% by weight, 30% by weight to 45% by weight, or 35% by weight to 45% by weight.

Thereafter, steps (2) to (4) may be carried out simultaneously, sequentially, or as selected at random.

Specifically, step (2) is to add a surfactant, step (3) is to add a rheology modifier, and step (4) is to add inorganic particles.

Details on the surfactant, the rheology modifier, and the inorganic particles are as described above.

More specifically, steps (2) to (4) may be carried out simultaneously or sequentially. Steps (2) to (4) may be selected at random and carried out one by one. For example, they may be carried out in the order of steps (2), (3), and (4), in the order of steps (3), (2), and (4), in the order of steps (4), (2), and (3), or in the order of steps (2), (4), and (3).

According to an embodiment of the present invention, steps (2) to (4) may be carried out sequentially.

Specifically, a surfactant and a rheology modifier may be added to the first aqueous dispersion to prepare a second aqueous dispersion, and inorganic particles may be added to the second aqueous dispersion to prepare a biodegradable coating composition.

In addition, stirring may be additionally carried out in one or more steps selected from steps (2) to (4). Details on the stirring are as described above.

Specifically, a surfactant may be added to the first aqueous dispersion prepared in step (1) with stirring, and a rheology modifier is further added thereto with stirring to prepare a second aqueous dispersion, and inorganic particles may be added to the second aqueous dispersion with stirring to prepare a biodegradable coating composition.

### Process for preparing a biodegradable article

The process for preparing a biodegradable article according to another embodiment of the present invention comprises preparing a biodegradable coating composition; and forming a biodegradable coating layer from the biodegradable coating composition.

Details on the preparation of a biodegradable coating composition are as described above.

Thereafter, a biodegradable coating layer is formed on at least one side of a substrate using the biodegradable coating composition.

According to an embodiment of the present invention, the step of forming a biodegradable coating layer may be carried out by applying the biodegradable coating composition on a substrate and drying it.

The substrate is not limited as long as it can form a biodegradable coating layer on the surface of the substrate. For example, the substrate may be at least one selected from the group consisting of paper, kraft paper, a fabric, a nonwoven fabric, a polyethylene terephthalate (PET) film, a polyester film such as polybutylene succinate (PBS), polybutylene adipate (PBA), polybutylene adipate terephthalate (PBAT), and polybutylene succinate terephthalate (PBST), and a polyimide (PI) film.

Specifically, the substrate may preferably be a substrate of a single material from the viewpoint of enhancing the coatability of the substrate. The substrate may be paper, kraft paper, fabric, or non-woven fabric, but it is not limited thereto. In addition, when the substrate comprises paper or kraft paper, it may be more advantageous for providing an environmentally friendly packaging material since it has better biodegradability than other plastic materials.

The substrate may have a thickness of 15 µm or more. For example, the thickness of the substrate may be 15 µm or more, 20 µm or more, 50 µm or more, 70 µm or more, 100 µm or more, 130 µm or more, 150 µm or more, 200 µm or more, 300 µm or more, or 500 µm or more.

In addition, the substrate may have a basis weight of 30 g/m² to 500 g/m². For example, when the substrate is paper, kraft paper, woven, knitted, or non-woven fabric, the basis weight of the substrate may be 30 g/m² to 500 g/m², 30 g/m² to 350 g/m², 30 g/m² to 200 g/m², 50 g/m² to 200 g/m², 80 g/m² to 200 g/m², 100 g/m² to 200 g/m², 130 g/m² to 190 g/m², 150 g/m² to 185 g/m², or 120 g/m² to 320 g/m².

Meanwhile, a barrier layer may be disposed on at least one side of the substrate. An environmentally friendly barrier film may be coated on the surface of the substrate to have moisture and/or oxygen barrier properties, or a functional coating layer having antistatic properties or adhesive properties may be further formed. The functional coating layer may comprise a primer coating layer and an adhesive coating layer, which may have materials and physical properties that are commonly used as long as they do not impair the effect desired in the present invention.

In addition, the biodegradable coating composition may be applied onto the substrate in a coating amount of 5 g/m² to 100 g/m². For example, the coating amount may be 5 g/m² to 100 g/m², 5 g/m² to 85 g/m², 5 g/m² to 70 g/m², 8 g/m² to 60 g/m², 9 g/m² to 50 g/m², 5 g/m² to 50 g/m², 6 g/m² to 40 g/m², 7 g/m² to 30 g/m², 8 g/m² to 20 g/m², or 10 g/m² to 40 g/m². As the coating amount satisfies the above range, coatability, productivity, and processability can be further enhanced.

In addition, the coating may be performed once to form a single coating layer or may be performed twice or more to form a plurality of coating layers. The coating amount can be adjusted within the above range depending on the desired number of coating layers. Specifically, the coating amount may be the total amount applied to a plurality of coating layers.

Once the biodegradable coating composition has been applied onto the substrate, it may be dried for 5 seconds to 30 minutes at 100°C to 200°C. For example, the drying may be carried out for 5 seconds to 30 minutes, 10 seconds to 25 minutes, 20 seconds to 20 minutes, 30 seconds to 15 minutes, or 40 seconds to 10 minutes, at 100°C to 200°C, 110°C to 185°C, 120°C to 180°C, or 130°C to 175°C.

The formation of a biodegradable coating layer may be carried out without particular limitations as long as it is a coating process generally used in the art. For example, the formation of a biodegradable coating layer may be carried out by gravure coating, slot coating, doctor blade coating, spray coating, bar coating, spin coating, or in-line coating, but it is not limited thereto.

### Biodegradable article

The biodegradable article according to another embodiment of the present invention comprises a substrate; and a biodegradable coating layer, wherein the biodegradable coating layer comprises a polyhydroxyalkanoate (PHA) resin; a surfactant; inorganic particles; and a rheology modifier, and the polyhydroxyalkanoate resin is a copolymerized polyhydroxyalkanoate resin comprising a 4-hydroxybutyrate (4-HB) repeat unit and has a weight average molecular weight of 10,000 g/mole to 1,200,000 g/mole.

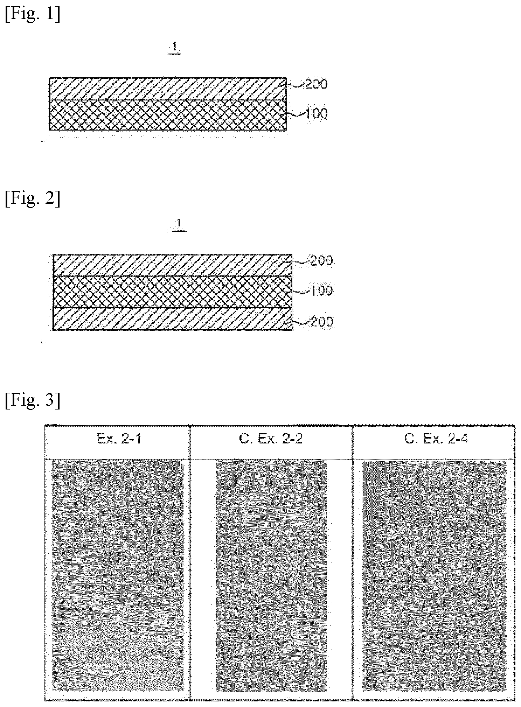

Fig. 1 shows a biodegradable article according to an embodiment of the present invention. Fig. 2 shows a biodegradable article according to another embodiment of the present invention.

Specifically, Fig. 1 illustrates a biodegradable article (1) in which a biodegradable coating layer (200) is formed on one side of a substrate (100). Fig. 2 illustrates a biodegradable article (1) in which a biodegradable coating layer (200) is formed on both sides of a substrate (100).

As the biodegradable article comprises a biodegradable coating layer on one or both sides of a substrate, and the biodegradable coating layer comprises a PHA resin, a surfactant, inorganic particles, and a rheology modifier, it is environmentally friendly by virtue of excellent biodegradability and biocompatibility and can have excellent coatability, productivity, and processability. In particular, a biodegradable article comprising the biodegradable coating layer has excellent oil resistance, so that it can exhibit excellent properties when applied as articles that require oil resistance, such as food packaging materials for packaging oily foods.

Details on the substrate are as described above.

In addition, the biodegradable coating layer may have a contact angle of 30° to 150°. For example, the contact angle of the biodegradable coating layer may be 30° to 150°, 40° to 140°, 40° to 130°, or 50° to 120°. As the contact angle of the biodegradable coating layer satisfies the above range, it can have excellent oil resistance.

The contact angle may be measured using a contact angle meter (product name: DSA100, manufacturer: KRUSS) at room temperature (25°C).

In addition, the biodegradable coating layer may have a thickness of 5 µm to 50 µm, 5 µm to 40 µm, or 6 µm to 30 µm.

The biodegradable article may have a kit rating of 5 or higher as measured by TAPPI UM 557. For example, the kit rating may be 5 or higher or 6 or higher. As the kit rating of the biodegradable article satisfies the above range, it has excellent oil resistance.

Specifically, the kit rating may be measured through an oil resistance kit rating test according to TAPPI UM 557 "Repellency of Paper and Board to Grease, Oil, and Waxes (Kit Test)."

More specifically, a kit rating test reagent is dropped from a certain height on the surface of the biodegradable article (5 cm in width and 15 cm in length), that is, on the coating layer formed on the biodegradable article. Then, after a certain period of time has elapsed, the excess kit rating test reagent is wiped out with a clean tissue or cotton swatch, and the surface is immediately visually inspected to determine the oil resistance kit rating.

In this test, if it darkens significantly as compared with the surface on which the test reagent was not dropped, it is determined as failure; and if not, it is determined as pass. The above test is repeated with higher kit rating test reagents until a failing kit rating test reagent is observed. The oil resistance kit rating may be determined as the average of the highest kit rating reagents that passed.

The biodegradable article comprising the biodegradable coating layer may be a packaging material, a cardboard box, a shopping bag, a disposable tableware, a packaging container, or a paper straw, but it is not limited thereto.

### Embodiments for Carrying Out the Invention

Hereinafter, the present invention will be described in more detail with reference to the following examples. But the following Examples are intended to illustrate the present invention, and the scope of the Examples is not limited thereto only.

### [Example]

### Preparation of a biodegradable coating composition

### Example 1-1

### (1) Preparation of a PHA resin

A polyhydroxyalkanoate (PHA) resin having a solids content of 10% by weight (content of 4-hydroxybutyrate (4-HB): 10% by weight, weight average molecular weight (Mw): 340,000 g/mole, average particle size: 2 µm, polydispersity index (PDI): 1.9, manufacturer: CJ) was prepared. The PHA resin was obtained by chemical crushing using sodium dodecylbenzene sulfonate.

### (2) Preparation of a biodegradable coating composition

The PHA resin was centrifuged in an aqueous system to prepare a first aqueous dispersion with a solids content of 40% by weight.

Thereafter, a 1-liter glass beaker was charged with 97 parts by weight of the first aqueous dispersion and 1 part by weight of polyvinyl alcohol (PVA, manufacturer: Kuraray, hydrolysis rate: 80%) having a concentration of 10% as a surfactant, which was stirred for 60 minutes at 1,500 rpm using a stirrer (product name: Homo-disper, manufacturer: Premix, maximum rotation speed per minute: 8,000 rpm). Thereafter, 1 part by weight of xanthan gum (manufacturer: Dyne Materials) having a concentration of 5% as a rheology modifier (Rr) was added thereto, followed by stirring for 10 minutes at 600 rpm to prepare a second aqueous dispersion having a solids content of 39% by weight.

Thereafter, 1 part by weight of spherical silica (product name: R202, manufacturer: Evonik) having a hydrophobic functional group as inorganic particles was added to the second aqueous dispersion, followed by stirring for 30 minutes at 2,000 rpm to prepare a biodegradable coating composition having a solids content of 39.95% by weight.

### Example 1-2

A biodegradable coating composition was prepared in the same manner as in Example 1-1, except that, in step (2), irregular talc (manufacturer: Kotz) that does not have a hydrophilic functional group, was used as the inorganic particles.

### Example 1-3

A biodegradable coating composition was prepared in the same manner as in Example 1-1, except that, in step (2), plate-shaped montmorillonite (manufacturer: Sigma-Aldrich) that does not have a hydrophilic functional group, was used as the inorganic particles.

### Example 1-4

A biodegradable coating composition was prepared in the same manner as in Example 1-1, except that, in step (2), plate-shaped boron nitride (manufacturer: IWsolution) that does not have a hydrophilic functional group, was used as the inorganic particles.

### Example 1-5

A biodegradable coating composition was prepared in the same manner as in Example 1-1, except that, in step (2), 0.5 part by weight of spherical silica having a hydrophobic functional group (product name: R202, manufacturer: Evonik) was used as the inorganic particles.

### Example 1-6

A biodegradable coating composition was prepared in the same manner as in Example 1-1, except that, in step (2), 3 parts by weight of spherical silica having a hydrophobic functional group (product name: R202, manufacturer: Evonik) was used as the inorganic particles.

### Example 1-7

A biodegradable coating composition was prepared in the same manner as in Example 1-1, except that, in step (1), a polyhydroxyalkanoate (PHA) resin having a solids content of 10% by weight (content of 4-hydroxybutyrate (4-HB): 8% by weight, weight average molecular weight (Mw): 300,000 g/mole, average particle size: 3 µm, polydispersity index (PDI): 1.9, manufacturer: CJ) was prepared.

### Comparative Example 1-1

A biodegradable coating composition was prepared in the same manner as in Example 1-1, except that, in step (2), no inorganic particles were added without stirring.

### Comparative Example 1-2

A biodegradable coating composition was prepared in the same manner as in Example 1-1, except that, in step (1), a polyhydroxyalkanoate (PHA) resin having a solids content of 5% by weight (content of 4-hydroxybutyrate (4-HB): 10% by weight, weight average molecular weight (Mw): 600,000 g/mole, average particle size: 2 µm, polydispersity index (PDI): 1.9, manufacturer: CJ) was prepared; and, in step (2), no inorganic particles were added without stirring.

### Comparative Example 1-3

A biodegradable coating composition was prepared in the same manner as in Example 1-1, except that, in step (1), a polyhydroxyalkanoate (PHA) resin having a solids content of 5% by weight (content of 4-hydroxybutyrate (4-HB): 10% by weight, weight average molecular weight (Mw): 600,000 g/mole, average particle size: 2 µm, polydispersity index (PDI): 1.9, manufacturer: CJ) was prepared.

### Comparative Example 1-4

A biodegradable coating composition was prepared in the same manner as in Example 1-1, except that, in step (1), a polyhydroxyalkanoate (PHA) resin having a solids content of 10% by weight (content of 4-hydroxybutyrate (4-HB): 10% by weight, weight average molecular weight (Mw): 190,000 g/mole, average particle size: 2 µm, polydispersity index (PDI): 2.1, manufacturer: CJ) was prepared; and, in step (2), no inorganic particles were added without stirring.

### Comparative Example 1-5

A biodegradable coating composition was prepared in the same manner as in Example 1-1, except that, in step (1), a polyhydroxyalkanoate (PHA) resin having a solids content of 10% by weight (content of 4-hydroxybutyrate (4-HB): 10% by weight, weight average molecular weight (Mw): 190,000 g/mole, average particle size: 2 µm, polydispersity index (PDI): 2.1, manufacturer: CJ) was prepared.

### Comparative Example 1-6

A biodegradable coating composition was prepared in the same manner as in Example 1-1, except that, in step (2), talc (manufacturer: Kotz) was used as the inorganic particles in an amount of 30 parts by weight.

### Comparative Example 1-7

A biodegradable coating composition was prepared in the same manner as in Example 1-1, except that, in step (2), no rheology modifier was added without stirring.

**[Table 1]**

| | PHA resin | | | 10% PVA solution (part by weight) | 5% Rr solution (part by weight) | Inorganic particles (part by weight) | Solids content of the biodegradable coating composition (part by weight) |
|---|---|---|---|---|---|---|---|
| | Mw (g/mole) | Solids content (% by weight) | Content (part by weight) | | | | |
| Ex. 1-1 | 340,000 | 40 | 97 | 1 | 1 | 1 | 39.95 |
| Ex. 1-2 | 340,000 | 40 | 97 | 1 | 1 | 1 | 39.95 |
| Ex. 1-3 | 340,000 | 40 | 97 | 1 | 1 | 1 | 39.95 |
| Ex. 1-4 | 340,000 | 40 | 97 | 1 | 1 | 1 | 39.95 |
| Ex. 1-5 | 340,000 | 40 | 97.5 | 1 | 1 | 0.5 | 39.65 |
| Ex. 1-6 | 340,000 | 40 | 95 | 1 | 1 | 3 | 39.15 |
| Ex. 1-7 | 300,000 | 40 | 97 | 1 | 1 | 1 | 39.95 |
| C. Ex. 1-1 | 340,000 | 40 | 98 | 1 | 1 | - | 39.35 |
| C. Ex. 1-2 | 600,000 | 40 | 98 | 1 | 1 | - | 39.35 |
| C. Ex. 1-3 | 600,000 | 40 | 97 | 1 | 1 | 1 | 39.95 |
| C. Ex. 1-4 | 190,000 | 40 | 98 | 1 | 1 | - | 39.35 |
| C. Ex. 1-5 | 190,000 | 40 | 97 | 1 | 1 | 1 | 39.95 |
| C. Ex. 1-6 | 340,000 | 40 | 68 | 1 | 1 | 30 | 57.35 |
| C. Ex. 1-7 | 340,000 | 40 | 98 | 1 | - | 1 | 40.30 |

### Preparation of a biodegradable article

### Example 2-1

The biodegradable coating composition prepared in Example 1-1 was applied on a substrate using a Mayer bar coater (manufacturer: RDS) in a coating amount of 15.4 g/m², which was dried for 10 minutes at 170°C to prepare a biodegradable article with a biodegradable coating layer. Here, uncoated kraft paper (manufacturer: Hansol Paper) with a basis weight of 180 g/m² was used as the substrate.

### Examples 2-2 to 2-7 and Comparative Examples 2-1 to 2-7

Biodegradable articles were each prepared in the same manner as in Example 2-1, except that the biodegradable coating compositions prepared in Examples 1-2 to 1-7 and Comparative Examples 1-1 to 1-7 were used, respectively. Here, the coating amount of the biodegradable coating composition was varied as shown in Table 2 below.

### [Test Example]

### Test Example 1: Dispersion stability

The biodegradable coating compositions prepared in Examples 1-1 to 1-7 and Comparative Examples 1-1 to 1-7 were each placed in a test tube and left for 2 weeks at 50°C. It was then visually evaluated for dispersion stability according to the following evaluation criteria.
⊚: Neither phase separation nor precipitation took place
○: Slight phase separation took place while no precipitation took place
Δ: Some phase separation and precipitation took place
×: Remarkable phase separation and precipitation took place

### Test Example 2: Viscosity

The biodegradable coating compositions prepared in Examples 1-1 to 1-7 and Comparative Examples 1-1 to 1-7 were each measured for viscosity with a DVE-RV viscometer (manufacturer: Brookfield) that measures viscosity using shear stress at a shear rate of 12 rpm at about 23°C.

### Test Example 3: Kit rating test

The biodegradable articles prepared in Examples 2-1 to 2-7 and Comparative Examples 2-1 to 2-7 were each measured for oil resistance kit rating test according to TAPPI UM 557 "Repellency of Paper and Board to Grease, Oil, and Waxes (Kit Test)."

Specifically, a kit rating test reagent was dropped in five drops from a height of 2.54 cm on the surface of the biodegradable article (5 cm in width and 15 cm in length), specifically, on the coating layer formed on one side of the biodegradable article. After 15 seconds had elapsed, the excess kit rating test reagent was wiped out with a clean tissue or cotton swatch, and the surface was immediately visually inspected.

If it darkened significantly as compared with the coating surface on which the test reagent was not dropped, it was determined as failure; and if not, it was determined as pass. The above test was repeated with higher kit rating test reagents until a failing kit rating test reagent was observed. The oil resistance kit rating was determined as the average of the highest kit rating reagents that passed.

**[Table 2]**

| | Biodegradable coating composition | | | Biodegradable article |
|---|---|---|---|---|
| | Coating amount (g/m²) | Dispersion stability | Viscosity (mPa·s) | Kit rating |
| Ex. 2-1 | 15.4 | ⊚ | 270 | 5 |
| Ex. 2-2 | 15.7 | ⊚ | 190 | 6 |
| Ex. 2-3 | 16.1 | ⊚ | 170 | 5 |
| Ex. 2-4 | 16.7 | ⊚ | 200 | 5 |
| Ex. 2-5 | 14.2 | ⊚ | 200 | 5 |
| Ex. 2-6 | 17.3 | × | 500 | 6 |
| Ex. 2-7 | 15.8 | ⊚ | 280 | 5 |
| C. Ex. 2-1 | 16.2 | ⊚ | 120 | 4 |
| C. Ex. 2-2 | 15.1 | ⊚ | 210 | 1 |
| C. Ex. 2-3 | Not coatable | × | Not measurable | - |
| C. Ex. 2-4 | 16.3 | ⊚ | 90 | 1 |
| C. Ex. 2-5 | 14.9 | ○ | 120 | 1 |
| C. Ex. 2-6 | Not coatable | × | Not measurable | - |
| C. Ex. 2-7 | 15.3 | × | 90 | 1 |

As can be seen from Table 2 above, the biodegradable articles of Examples 2-1 to 2-7 had very excellent oil resistance as compared with the articles of Comparative Examples 2-1 to 2-7.

Specifically, as the biodegradable articles of Examples 2-1 to 2-7 comprised a coating layer prepared using each of the biodegradable coating compositions of Examples 1-1 to 1-7 with excellent dispersion stability and viscosity characteristics, they all had excellent oil resistance with a kit rating of 5 or higher. Accordingly, when the biodegradable article is applied as articles that require oil resistance, such as food packaging materials for packaging oily foods, it can exhibit excellent properties.

In contrast, as the biodegradable articles of Comparative Examples 2-1 to 2-7 comprised a coating layer prepared using each of the biodegradable coating compositions of Comparative Examples 1-1 to 1-7 with poor dispersion stability and viscosity characteristics, they all had very poor oil resistance with a kit rating of less than 5, most of which was 1. In particular, in Comparative Examples 2-3 and 2-6, the coatability and viscosity characteristics were poor, making it impossible to apply each of the coating compositions to form a coating layer.

In addition, Fig. 3 shows photographs of the surfaces of the biodegradable articles of Example 2-1, Comparative Example 2-2, and Comparative Example 2-4.

Specifically, as can be seen from Fig. 3, in Example 2-1, the coatability was excellent to form a uniform coating layer. In contrast, in Comparative Examples 2-2 and 2-4, the coatability was poor, failing to form a uniform coating layer, and the coating layer was cracked to reveal the substrate to the outside, resulting in very poor quality.

## Claims

1. A biodegradable coating composition, which comprises a polyhydroxyalkanoate (PHA) resin; a surfactant; inorganic particles; and a rheology modifier,
wherein the polyhydroxyalkanoate resin is a copolymerized polyhydroxyalkanoate resin comprising a 4-hydroxybutyrate (4-HB) repeat unit and has a weight average molecular weight of 10,000 g/mole to 1,200,000 g/mole.

2. The biodegradable coating composition of claim 1, wherein the copolymerized polyhydroxyalkanoate resin comprises the 4-hydroxybutyrate (4-HB) repeat unit in an amount of 0.1% by weight to 60% by weight based on the total weight of the copolymerized polyhydroxyalkanoate resin.

3. The biodegradable coating composition of claim 1, wherein the polyhydroxyalkanoate resin has an average particle size of 0.5 µm to 5 µm and a polydispersity index (PDI) of less than 2.5.

4. The biodegradable coating composition of claim 1, wherein the surfactant is employed in an amount less than 0.3% by weight based on the total weight of the biodegradable coating composition on the basis of solids content, and
the surfactant is at least one selected from the group consisting of cationic surfactants, anionic surfactants, phosphoric acid-based surfactants, fatty acid-based surfactants, acrylic-based surfactants, urethane-based surfactants, epoxy-based surfactants, and nonionic surfactants, or a polymeric surfactant comprising at least one selected from the group consisting of carboxylic acids, amines, isocyanates, and derivatives thereof.

5. The biodegradable coating composition of claim 1, wherein the inorganic particles do not contain a hydrophilic functional group.

6. The biodegradable coating composition of claim 1, wherein the inorganic particles are at least one selected from the group consisting of talc, clay, silica, titanium oxide, montmorillonite, boron nitride, calcium carbonate, titanium dioxide, antimony trioxide, and zinc oxide.

7. The biodegradable coating composition of claim 1, wherein the inorganic particles are employed in an amount of 0.1% by weight to 10% by weight based on the total weight of the biodegradable coating composition on the basis of solids content.

8. The biodegradable coating composition of claim 1, wherein the rheology modifier is at least one selected from the group consisting of gum, clay mineral, cellulose derivatives, cellulose-based modifiers, acrylic-based modifiers, and urethane-based modifiers.

9. The biodegradable coating composition of claim 1, wherein the rheology modifier has a branched, linear, plate-like, irregular, spherical, or rod-like shape.

10. The biodegradable coating composition of claim 1, wherein the rheology modifier is employed in an amount of 0.01% by weight to 5% by weight based on the total weight of the biodegradable coating composition on the basis of solids content.

11. The biodegradable coating composition of claim 1, wherein the solids content of the biodegradable coating composition is 10% by weight to 60% by weight.

12. The biodegradable coating composition of claim 1, wherein the biodegradable coating composition has a viscosity of 130 mPa.s to 1,000 mPa s.

13. A process for preparing a biodegradable coating composition, which comprises:
(1) stirring a polyhydroxyalkanoate (PHA) resin;
(2) adding a surfactant;
(3) adding a rheology modifier; and
(4) adding inorganic particles,
wherein steps (2) to (4) are carried out simultaneously, sequentially, or as selected at random, and the polyhydroxyalkanoate resin is a copolymerized polyhydroxyalkanoate resin comprising a 4-hydroxybutyrate (4-HB) repeat unit and has a weight average molecular weight of 10,000 g/mole to 1,200,000 g/mole.

14. The process for preparing a biodegradable coating composition of claim 13, wherein stirring is additionally carried out in one or more steps selected from steps (2) to (4).

15. The process for preparing a biodegradable coating composition of claim 14, wherein the stirring is carried out for 5 minutes to 150 minutes at 3,000 rpm or less.

16. A biodegradable article, which comprises a substrate; and a biodegradable coating layer,
wherein the biodegradable coating layer comprises a polyhydroxyalkanoate (PHA) resin; a surfactant; inorganic particles; and a rheology modifier, and the polyhydroxyalkanoate resin is a copolymerized polyhydroxyalkanoate resin comprising a 4-hydroxybutyrate (4-HB) repeat unit and has a weight average molecular weight of 10,000 g/mole to 1,200,000 g/mole.

17. The biodegradable article of claim 16, which has a kit rating of 5 or higher as measured by TAPPI UM 557.

18. The biodegradable article of claim 16, wherein the biodegradable coating layer is formed in a coating amount of 5 g/m² to 100 g/m².

19. The biodegradable article of claim 16, wherein the biodegradable coating layer has a contact angle of 30° to 150°.
